**Europäisches Patentamt**

(19) **European Patent Office**

**Office européen des brevets**

(11) Veröffentlichungsnummer: **0 197 473**

**A2**

(12) # EUROPÄISCHE PATENTANMELDUNG

(21) Anmeldenummer: 86104350.3

(22) Anmeldetag: 29.03.86

(51) Int. Cl.⁴: **C 22 B 34/12**
**C 01 G 23/053**

(30) Priorität: 12.04.85 DE 3513121

(43) Veröffentlichungstag der Anmeldung:
15.10.86 Patentblatt 86/42

(84) Benannte Vertragsstaaten:
BE DE FR GB IT NL

(71) Anmelder: BAYER AG
Konzernverwaltung RP Patentabteilung
D-5090 Leverkusen 1 Bayerwerk(DE)

(72) Erfinder: Lailach, Günter, Dr.
Bodelschwinghstrasse 23
D-4150 Krefeld(DE)

(72) Erfinder: Gerkern, Rudolf, Dr.
Rather Strasse 79
D-4150 Krefeld(DE)

(72) Erfinder: von Deuten, Klaus, Dr.
Doerperhofstrasse 39
D-4150 Krefeld(DE)

(72) Erfinder: Vincentz, Georg
Erlenweinstrasse 64
D-4150 Krefeld(DE)

(54) Verfahren zur Herstellung von Titandioxid.

(57) Die vorliegende Erfindung betrifft ein Verfahren zur Herstellung von Titandioxid durch diskontinuierlichen Aufschluß titanhaltiger Rohstoffe mit Schwefelsäure, Herstellen einer für die Hydrolyse geeigneten Titanylsulfatlösung aus dem beim Aufschluß erhaltenen festen Aufschlußkuchen, Hydrolyse des Titanylsulfates, Abtrennen und Kalzinieren des titanhaltigen Hydrolysats, Eindampfen der vom Hydrolysat abgetrennten Dünnsäure und wiederverwendung der aus der eingedampften Dünnsäure abgetrennten Schwefelsure beim Titan-Rohstoffaufschluß, indem die recyclierte Schwefelsäure und, zur Kompensation der Schwefelsäureverluste, Oleum mit solchen Konzentrationen und in solchen Mengen eingestzt werden, daß die feststoff- und salzfreie Schwefelsäure zu Beginn der Aufschlußreaktion eine Konzentration von 84 – 90 Gew.-% $H_2SO_4$ hat.

EP 0 197 473 A2

0197473

BAYER AKTIENGESELLSCHAFT    5090 Leverkusen, Bayerwerk
Konzernverwaltung RP
Patentabteilung                St/ABc

## Verfahren zur Herstellung von Titandioxid

Die vorliegende Erfindung betrifft ein Verfahren zur
Herstellung von Titandioxid durch diskontinuierlichen
Aufschluß titanhaltiger Rohstoffe mit Schwefelsäure,
Herstellen einer für die Hydrolyse geeigneten Titanylsulfatlösung aus dem beim Aufschluß erhaltenen festen
Aufschlußkuchen, Hydrolyse des Titanylsulfates, Abtrennen und Kalzinieren des titanhaltigen Hydrolysats, Eindampfen der vom Hydrolysat abgetrennten Dünnsäure und
Wiederverwendung der aus der eingedampften Dünnsäure
abgetrennten Schwefelsäure beim Titan-Rohstoffaufschluß,
indem die recyclierte Schwefelsäure und, zur Kompensation der Schwefelsäureverluste, Oleum mit solchen Konzentrationen und in solchen Mengen eingesetzt werden,
daß die feststoff-und salzfreie Schwefelsäure zu Beginn
der Aufschlußreaktion eine Konzentration von 84 - 90
Gew.-% $H_2SO_4$ hat.

Zunehmend wird die Forderung nach einem Recycling der
Schwefelsäure aus dem $TiO_2$-Herstellungsprozeß nach dem
Sulfatverfahren erhoben. Außer den zu erwartenden wirtschaftlichen Nachteilen im Vergleich zur Dünnsäureverklappung standen einer Verwirklichung oft auch technische Probleme entgegen.

Le A 23 706-Ausland

Ein Verfahren zur Aufarbeitung von Dünnsäuren ist aus der DE-A 3 327 769 bekannt und wird im industriellen Maßstab angewandt. Je nach den örtlichen Gegebenheiten können hier aber Probleme auftreten, wenn die Dünnsäure nahezu vollständig recycliert werden soll.

Nach den derzeit propagierten Aufbereitungsverfahren wird die Dünnsäure, bevorzugt durch mehrstufige Vakuumeindampfung, so weit konzentriert, daß von den während der Eindampfung kristallisierten Metallsulfaten eine 60-70 %ige Schwefelsäure mit einem geringen Gehalt gelöster Metallsulfate abgetrennt werden kann. Die Konzentration dieser zurückgewonnenen Schwefelsäure ist aber im allgemeinen zu gering, um im Gemisch mit frischer Schwefelsäure oder Oleum, die zum Ersatz der Schwefelsäureverluste (durch Metallsulfatbildung, Restfeuchte an den abgetrennten Metallsulfaten, Abwasser) erforderlich sind, eine für den diskontinuierlichen Rohstoffaufschluß geeignete Startkonzentration der Schwefelsäure zu ergeben. Deshalb ist es erforderlich, die von den Metallsulfaten abgetrennte Schwefelsäure weiter einzudampfen, was beispielsweise unter Ausnutzung der Abwärme aus der $TiO_2$-Kalzinierung erfolgen kann (EP-A 97 259). Je größer der Anteil der recyclierten Schwefelsäure am Gesamteinsatz ist, desto höher muß diese Konzentration der recyclierten Säure sein. Mit steigender Konzentration nehmen aber energetischer und technischer Aufwand stark zu. Insbesondere bei einem Einsatz der aus ökologischer Sicht vorteilhaften Titanschlakken als Rohstoff ist eine besonders hohe Konzentration der recyclierten Säure notwendig, wenn die technisch mögliche maximale Recylierung angestrebt wird.

Le A 23 706

Aus der DE-A 2 729 755 ist bekannt, daß Ilmenit mit Schwefelsäure einer Minimalkonzentration von 84 % noch mit befriedigenden Ausbeuten aufgeschlossen werden kann. In der betrieblichen Praxis hat sich aber gezeigt, daß für Schlackeaufschlüsse etwa 90 %ige Schwefelsäure, für Ilmenitaufschlüsse etwa 88 %ige oder höher konzentrierte Schwefelsäure erforderlich sind. Bei geringerer Startkonzentration der Schwefelsäure sinkt die $TiO_2$-Ausbeute, was angesichts der relativ hohen Rohstoffkosten nicht vertretbar ist.

Die Aufgabe der vorliegenden Erfindung ist es daher, ein Verfahren zur Verfügung zu stellen, welches wirtschaftlich durchführbar ist und nicht die beschriebenen Nachteile der bekannten Verfahren aufweist.

Überraschenderweise wurde nun gefunden, daß man auch bei Schwefelsäurekonzentration unterhalb 88 % Aufschlüsse mit guten $TiO_2$-Ausbeuten durchführen kann, wenn Dampf statt Luft durch den Aufschlußkuchen geblasen wird. Dabei ist das Durchblasen von Luft üblich, um den Kuchen porös zu halten, was ein besseres und schnelleres Auflösen in Wasser erlaubt. Gegenstand der vorliegenden Erfindung ist somit ein Verfahren zur Herstellung von Titandioxid durch diskontinuierlichen Aufschluß titanhaltiger Rohstoffe mit Schwefelsäure, Herstellen einer für die Hydrolyse geeigneten Titanylsulfatlösung aus dem beim Aufschluß erhaltenen festen Aufschlußkuchen, Hydrolyse des Titanylsulfates, Abtrennen und Kalzinieren des titanhaltigen Hydrolysats, Eindampfen der vom Hydrolysat abgetrennten

Le A 23 706

Dünnsäure und Wiederverwendung der aus der eingedampften Dünnsäure abgetrennten Schwefelsäure beim Titan-Rohstoffaufschluß, indem die recyclierte Schwefelsäure und, zur Kompensation der Schwefelsäureverluste, Oleum mit solchen Konzentrationen und in solchen Mengen eingesetzt werden, daß die feststoff- und salzfreie Schwefelsäure zu Beginn der Aufschlußreaktion eine Konzentration von 84 - 90 Gew.-% $H_2SO_4$ hat, wobei durch die Reaktionsmasse Dampf oder ein Luft-Dampf-Gemisch geblasen wird.

Besonders bevorzugt ist es, daß das Einblasen von Dampf bis zum Ende der Reifezeit des Aufschlußkuchens erfolgt. Durch den Einsatz des erfindungsgemäßen Verfahrens wird es möglich, durch Herabsetzen der erforderlichen Startkonzentration beim Rohstoffaufschluß eine Verminderung der erforderlichen Konzentration der recyclierten Säure zu erreichen.

Es ist dabei nicht nötig, schon von Beginn des Aufschlußvorganges den Dampf einzublasen. Vielmehr ist es vorteilhaft, daß bis zum Erreichen der maximalen Reaktionstemperatur der Reaktionsmasse Luft und anschließend bis zum Ende der Reaktionszeit Dampf oder ein Dampf-Luft-Gemisch durch die Reaktionsmasse geblasen wird.

Um besonders gute Ergebnisse zu erzielen, sollten der Dampf oder das Dampf-Luft-Gemisch eine Temperatur von mindestens 150° C aufweisen.

Durch Anwendung der Erfindung kann die Startkonzentration der Schwefelsäure ohne $TiO_2$-Ausbeuteverluste bei

Le A 23 706

Schlackeaufschlüssen von ca. 90 % $H_2SO_4$ auf 86 - 88 % $H_2SO_4$ und bei Ilmenitauschlüssen von 88 - 90 % $H_2SO_4$ auf 84 - 86 %

$H_2SO_4$ gesenkt werden. Daraus resultiert eine wirtschaftlich signifikante Verminderung der erforderlichen Konzentrationen der recyclierten Schwefelsäure um 3 bis 10 % je nach Anteil am Gesamtschwefelsäureeinsatz.

Besonders vorteilhaft für die Durchführung des erfindungsgemäßen Verfahrens ist es, der Rohstoffmischung für die Aufschlußreaktion (gemahlener $TiO_2$-Rohstoff, konzentrierte Schwefelsäure oder Oleum, recyclierte Schwefelsäure) einen Teil der aus der eingedampften Dünnsäure abgetrennten Metallsulfate zuzumischen. Dadurch wird der Aufschlußkuchen früher fest und bleibt poröser, so daß eine geringere Dampfmenge erforderlich ist, um einen gut löslichen Aufschlußkuchen zu erhalten. Das auf diese Weise in den Prozeß recyclierte Eisensulfat wird vorteilhaft als Eisensulfat-Heptahydrat aus der Dünnsäure abgetrennt. Dadurch verringert sich die Metallsulfatmenge, die thermisch gespalten werden muß.

Die Vorteile der Erfindung sollen durch folgende Beispiele verdeutlicht werden, ohne daß darin eine Einschränkung zu sehen ist.

Le A 23 706

Beispiel 1 (Vergleichsbeispiel)

17,5 t gemahlener Titanschlacke wurden mit 15,26 t recyclierter Schwefelsäure (mit 67,4 % $H_2SO_4$, 28,4 % $H_2O$ und 4,2 % $MeSO_4$ [alle Angaben in Gew.-%]) gemischt und anschließend mit 17,84 t 27 %igen Oleums versetzt. Dabei stieg die Temperatur der Mischung auf 130°C. Während der folgenden 10 min stieg die Reaktionstemperatur auf 211°C und fiel danach während 20 min auf 190°C. In dem Zeitraum zwischen Oleumzugabe und dem Erreichen der Temperatur von 190°C wurden 200 $m^3$ Luft durch die Reaktionsmasse geblasen. Während der anschließenden Reifezeit von 7 h wurde insgesamt ebenfalls 200 $m^3$ Luft durch den Aufschlußkuchen geblasen. Dabei fiel die Temperatur auf 174°C. Anschließend wurde der Aufschlußkuchen in Wasser gelöst. Die $TiO_2$-Ausbeute betrug 95,6.%. Für das Aufheizen der durch die Masse geblasenen Luft von 10°C auf 174-215°C wurden nur ca. 2 % der Wärmemenge verbraucht, die von der Reaktionsmasse beim Abkühlen von 215°C auf 174°C abgegeben wurde.

Beispiel 2 (Vergleichsbeispiel)

17,5 t gemahlener Titanschlacke wurden mit 18,5 t recyclierter Schwefelsäure (67,0 % $H_2SO_4$, 28,9 % $H_2O$ und 4,1 % $MeSO_4$) gemischt und danach mit 15,9 t 27 %igen Oleums versetzt. Daraus errechnet sich für die feststoff- und salzfreie Schwefelsäure eine Konzentration von 86,9 % beim Start der Aufschlußreaktion. Der weitere Prozeß wurde gemäß Beispiel 1 durchgeführt. Die maximal erreichte Temperatur betrug 207°C. Bis zum

Le A 23 706

Ende der 7stündigen Reifezeit fiel die Temperatur auf 155° C. Die TiO$_2$-Ausbeute betrug 94,1 %.

Beispiel 3

17,5 t gemahlener Titanschlacke wurden wie in Beispiel 2 mit 18,5 t recyclierter Schwefelsäure (67,0 % H$_2$SO$_4$) und 15,9 t 27 % igen Oleums versetzt. Nachdem die Maximaltemperatur von 204° C erreicht war, wurde statt Luft 6bar-Dampf (180° C, 280 kg/h) durch die Reaktionsmasse geblasen. Nach 20 min. wurde die Dampfmenge auf 12 kg/h reduziert. Nach 7 h Reifezeit betrug die Temperatur der Aufschlußmasse nach dem Abstellen der Dampfeinblasung 175° C. Die TiO$_2$-Ausbeute betrug 95,3 %.

Beispiel 4 (Vergleichsbeispiel)

17 t gemahlenen Ilmenits wurden mit 22,75 t recyclierter Schwefelsäure (78,2 % H$_2$SO$_4$, 17,7 % H$_2$O und 4,1 % MeSO$_4$) gemischt und anschließend mit 7,8 t 27 %igen Oleums versetzt. Für die feststoff- und salzfreie Schwefelsäure errechnet sich aus obigen Daten eine Konzentration von 89,9 % H$_2$SO$_4$. Nach 30 min erreichte die Reaktion die Maximaltemperatur von 186° C. Die Reaktionsmasse wurde während des Temperaturanstieges nach der Oleumzugabe bis 20 min nach Erreichen der Maximaltemperatur mit Luft (400 m$^3$/h) durchblasen. Danach wurde die Luftmenge während der 3stündigen Reifezeit auf 20 m$^3$/h reduziert. Während der Reifezeit fiel die Temperatur auf 154° C. Die TiO$_2$-Ausbeute betrug 95,8 %.

Le A 23 706

Beispiel 5 (Vergleichsbeispiel)

17 t gemahlenen Ilmenits wurden mit 22,8 t recyclierter Schwefelsäure (74,5 % $H_2SO_4$, 21,3 % $H_2O$ und 4,2 % $MeSO_4$) gemischt, und die Mischung mit 8,69 t 27 %igen Oleums versetzt. (Startkonzentration der reinen Schwefelsäure = 86,1 %). Die Lufteinblasung erfolgte analog Beispiel 4. Die Maximaltemperatur betrug 177°C, die Endtemperatur 136°C, die $TiO_2$-Ausbeute 93,8 %.

Beispiel 6

Bei einem Aufschluß analog Beispiel 5 wurde, sobald die Maximaltemperatur von 175°C erreicht war, die Lufteinblasung abgebrochen und statt dessen wurde 6bar-Dampf (20 min lang 280 kg/h und 3 h lang 15 kg/h) eingeblasen. Nach Abstellen des Dampfes am Ende der Reifezeit betrug die Temperatur des Aufschlußkuchens 158°C. Die $TiO_2$-Ausbeute betrug 95,0 %.

Beispiel 7

17 t gemahlenen Ilmenits wurden mit 24,5 t recyclierter Schwefelsäure (74,5 % $H_2SO_4$ analog Beispiel 5) gemischt und mit 6,86 t 27 %igen Oleums versetzt (entspr. einer Startkonzentration der reinen Schwefelsäure von 84,2 %). Durch die Masse wurden während 45 min 210 kg 6bar-Dampf geblasen. Während der anschließenden Reifezeit wurde die Dampfeinblasung auf 15 kg/h reduziert. Nach 4 h wurde der Dampfstrom abgestellt. Die Temperatur des Aufschlußkuchens betrug 152°C, die $TiO_2$-Ausbeute 94,8 %.

Le A 23 706

## Patentansprüche

1. Verfahren zur Herstellung von Titandioxid durch diskontinuierlichen Aufschluß titanhaltiger Rohstoffe mit Schwefelsäure, Herstellen einer für die Hydrolyse geeigneten Titanylsulfatlösung aus dem beim Aufschluß erhaltenen festen Aufschlußkuchen, Hydrolyse des Titanylsulfates, Abtrennen und Kalzinieren des titanhaltigen Hydrolysats, Eindampfen der vom Hydrolysat abgetrennten Dünnsäure und Wiederverwendung der aus der eingedampften Dünnsäure abgetrennten Schwefelsäure beim Titan-Rohstoffaufschluß, indem die recyclierte Schwefelsäure und, zur Kompensation der Schwefelsäureverluste, Oleum mit solchen Konzentrationen und in solchen Mengen eingesetzt werden, daß die feststoff- und salzfreie Schwefelsäure zu Beginn der Aufschlußreaktion eine Konzentration von 84 - 90 Gew.-% $H_2SO_4$ hat, dadurch gekennzeichnet, daß durch die Reaktionsmasse Dampf oder ein Luft-Dampf-Gemisch geblasen wird.

2. Verfahren gemäß Anspruch 1, dadurch gekennzeichnet, daß das Einblasen bis zum Ende der Reifezeit des Aufschlußkuchens erfolgt.

3. Verfahren gemäß einem der Ansprüche 1 oder 2, dadurch gekennzeichnet, daß bis zum Erreichen der maximalen Reaktionstemperatur der Reaktionsmasse Luft und anschließend bis zum Ende der Reaktionszeit Dampf oder ein Dampf-Luft-Gemisch durch die Reaktionsmasse geblasen wird.

Le A 23 706

4. Verfahren gemäß einem oder mehrerer der Ansprüche 1 bis 3, dadurch gekennzeichnet, daß der Dampf oder das Dampf-Luft-Gemisch eine Temperatur von mindestens 150°C aufweisen.

Le A 23 706